# EUROPEAN PATENT APPLICATION

(11) **EP 2 131 146 A1**
(43) Date of publication of application: **09.12.2009**
(21) Application number: 08157414.7
(22) Date of filing: 02.06.2008
(51) Int. Cl.: G01B 11/275

(54) **Positioning of light-reflecting object using sweeping line-shaped beams**

(71) Applicant: SAAB AB, 581 88 Linköping (SE)
(72) Inventor: ÅSTRÖM, Anders, 584 37, LINKÖPING (SE)
(74) Representative: Herbjörnsen, Rut

(57) **Abstract**

The present invention provides an improved method for positioning of an object. The method comprises the steps of:
- sweeping at least two line-shaped light beams having different inclination angles across an object comprising at least three non-aligned light-reflecting areas at known positions relative to each other;
- determining the bearings of said light beams when reflected by said light-reflecting areas; and
- calculate the three dimensional position and/or tilt of said object relative to said light source based on said determined bearings and the known relative positions of the light-reflecting areas.

By using two light beams having different inclination angles, two light-beam bearings are obtained for each light-reflecting area, which bearings can be used to calculate the three dimensional position and/or tilt of the object relative to the light source. According to an aspect of the invention, the proposed positioning method is used in a vehicle wheel alignment application wherein it allows for simultaneous wheel toe and camber-angle determination.

## Description

### Technical Field

The present invention relates to the field of light-based positioning in general, and more particularly to a method using sweeping line-shaped light beams for positioning of light-reflecting objects.

### Background Art

Position determination of light-reflecting bodies using sweeping light beams, such as laser beams, is well known in the art and used in various applications.

One such application is vehicle wheel alignment. Wheel alignment is the process of correctly positioning the steering components relative to each other and to the vehicle's frame. The alignment of the wheels of a vehicle is of uttermost importance not only to the way the vehicle behaves on the road but also to tire wear and vehicle fuel consumption. Even a minor misalignment of the wheels can make a big difference and severely deteriorate vehicle road holding qualities, increase tire wear and increase vehicle fuel consumption. Wheel alignment is particularly important when it comes to big and heavy vehicles like trucks, combination vehicles (trailers etc.), buses, coaches, double deckers and the like, where wheel misalignment considerably increases fuel consumption and makes the vehicles unstable due to their long vehicle bodies.

In the process of wheel alignment, there are several geometric angles of interest. One of those is the so called toe angle which is a measure of the inward/outward tilt of the front of a wheel from the centre line of the vehicle, or, in other words, the angle of a wheel relative to the longitudinal direction of the vehicle as seen from above. Another angle of importance is the so called camber angle. The camber angle is the inward/outward tilt of the wheel at the top, measured from true vertical.

Previously, wheel and wheel axle alignment has relied on various simple tools, such as gauges. Today, however, there are modern wheel alignment systems that utilize positioning by means of sweeping laser beams to determine the tilt of individual wheels in order to align the wheels of a vehicle properly.

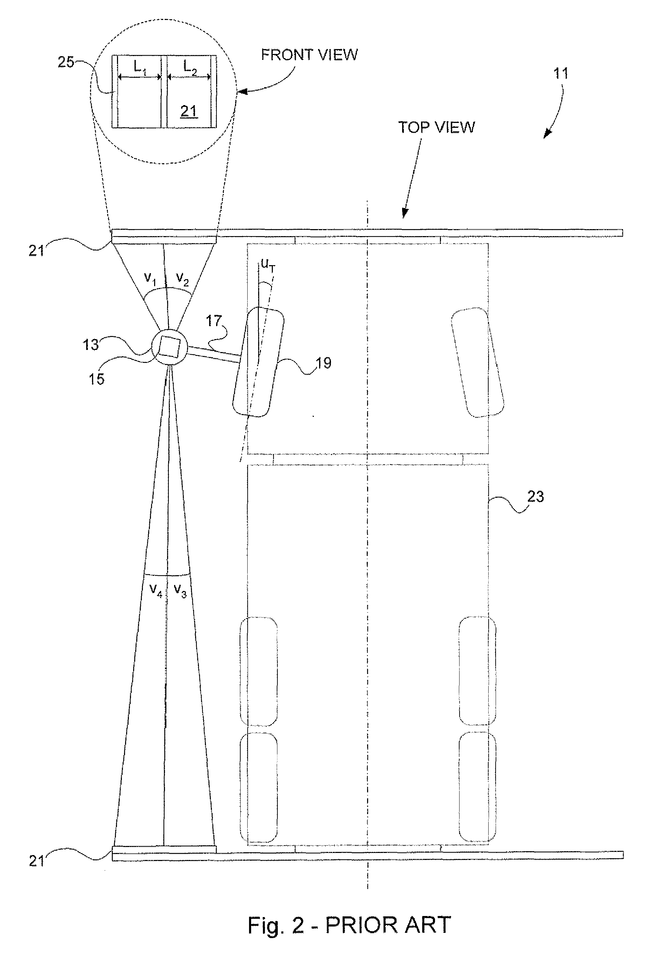

An example of such a wheel alignment system for toe-angle measurements are provided by the Swedish company JOSAM. The system is described at their homepage http://www.josam.se, 2008-04-28, and will also be described in more detail with reference to Fig. 2 in the detailed description of this application.

This system utilizes a horizontally rotatable point laser and a laser detector which are substantially co-located and attached to the wheel whose toe angle is to be measured, such that the horizontal position of the laser arrangement depends on the toe angle of the wheel in a known way. The system also utilizes two fixed laser reflectors which are horizontally aligned with the laser arrangement on opposite sides thereof, typically in level with the front and back of the vehicle, each comprising three vertical reflex stripes at a known distance from each other. By sweeping the laser beam across one of the reflector, the angles between the laser source and the reflex stripes of that reflector are determined by determining the angular position of the laser source at the point in time at which the reflected laser beam strikes the detector. By rotating the laser source, such angles can hence be obtained for both the front and rear reflector. As the positions of the reflectors are known, the so obtained angles can be used to determine the horizontal position of the laser arrangement and, as the horizontal position of the laser arrangement depends on the toe angle of the wheel in a known way, the toe angle can be determined. This prior art wheel alignment system will be described in more detail with reference to Fig. 2 in the following detailed description.

The above described wheel alignment system hence determines the toe angle of a wheel by determining the horizontal position of a laser source relative to two fixed laser reflectors.

A disadvantage with this system is that it is unable to simultaneously determine both toe and camber angle of the wheel on which measurements are performed.

### Summary

It is an object of the present invention to provide an improved method for positioning of an object.

This object is achieved by a method for determining the position of an object comprising the steps of:
- sweeping, by means of a light source, at least two line-shaped light beams having different inclination angles across an object comprising at least three non-aligned light-reflecting areas at known positions relative to each other;
- determining the bearings of said light beams when reflected by said light-reflecting areas; and
- calculate the three dimensional position and/or tilt of said object relative to said light source based on said determined bearings and the known relative positions of the light-reflecting areas.

By using two light beams having different inclination angles, two bearings are obtained for each light-reflecting area (hereinafter referred to as a reflex area). The difference in bearing together with the inclination angles of the line-shaped light beams can be used to calculate both the actual bearing and the elevation angle between the light source and that particular reflex area. As the actual bearing and elevation from the light source to each reflex area can be determined, and as the positions of the reflex areas relative to each other are known, the three dimensional (3D) position of the object can be determined relative to the light source, or vice versa.

According to an aspect of the invention, the method is used in a vehicle wheel alignment application wherein the method allows for simultaneous determination of both toe and camber angle of a wheel. This can be achieved by attaching the light source to a wheel that is to be aligned, such that the position of the light source depends in a known way on the toe and camber angles of the wheel. By placing an object (hereinafter referred to as reflector) comprising the at least three reflex areas in a known position, the three dimensional position of the light source relative to the reflector can be determined. Thereby, as the dependencies between the position of the light source and the toe and camber angles of the wheel are known, said angles can be calculated.

Besides the ability to simultaneously determine the toe and camber angle of a wheel, another advantage of a wheel alignment system utilizing the principles of the proposed method for positioning of an object is that the same system set-up can be used also for vehicle frame/chassis alignment. As the method allows for 3D positioning of the light source with respect to the reflector, and as the position of the reflector is known, both side sway and vertical bends of a vehicle frame can be detected and determined by attaching the light source thereto.

Yet another advantage of the proposed positioning method is that not only can the three dimensional position of the reflector in relation to the light source be determined, but also the tilt of the reflector in relation to the light source. As the method allows for determination of the bearing and elevation from the light source to each reflex area of the reflector, three hypothetical lines along which the respective reflex area must be located can be drawn from the light source. As the distances between the reflex areas are known, both the position and tilt of the reflector with respect to the light source can be determined by analyzing the pattern of these hypothetical lines.

This feature adds another advantage to the above described wheel alignment system in that it also can be used to establish if the vehicle's frame is twisted by determining the horizontal and vertical tilt of the light source with respect to the reflector when attached to the frame.

The object is also achieved by a light transceiver device for determining the position of an object comprising at least three non-aligned light-reflecting areas at known positions relative to each other, said system comprising:
- a light source arranged to sweep at least two line-shaped light beams having different inclination angles across said object;
- light detection means arranged to detect reflections of said light beams when reflected by said light-reflecting areas;
- bearing determination means arranged to determine the bearings of said light beams when reflected by said light-reflecting areas; and
- calculation means arranged to calculate the three dimensional position and/or tilt of said object relative to said light source based on said determined bearings and the known relative positions of the light-reflecting areas.

The object is also achieved by a positioning system which includes an object comprising at least three non-aligned light-reflecting areas at known positions relative to each other, and a light transceiver device as defined above.

The use of the positioning system according to the invention is not limited to vehicle wheel and frame alignment applications but can be advantageously used in any application in which there is a need to determine a three dimensional position of an object in relation to a point of reference, and/or the tilt of an object in relation to a plane of reference.

For example, the positioning system may be used for positioning targets in shooting simulation exercises. By attaching the at least three light-reflecting areas to a target body and equip a firearm simulator with a light transceiver device according to the invention, the position and tilt of the firearm in relation to the target can be calculated. This information can then be used to determine whether a simulated shot hits or misses the target when a user fires the firearm.

According to an aspect of the invention, the light-reflecting areas, or reflex areas, are arranged in a common plane on a sheet or plate (hereinafter referred to as a reflector plate). The reflector plate can then be attached in a simple manner to any object whose position and/or inclination is to be determined. Preferably, the reflector used in the above described vehicle wheel and frame alignment application is such a reflector plate.

If the positioning system is used in an application in which the object that comprises the reflex areas (e.g. a reflector plate) is known not to tilt in relation to the plane in which the light beams are swept, the reflex areas can be designed to maximize reflection of the sweeping light beams. This is preferably achieved by designing the reflex areas such that they are elongated in the longitudinal direction of the line-shaped light beams.

As the proposed positioning principle utilizes the bearings of the light beams when reflections thereof are detected in order to determine the position and/or inclination of an object, errors may occur due to reflections caused by other nearby light-reflecting objects. In order to deal with this problem, the light detection means of the positioning system may be arranged to measure the intensity of the detected light. As the intensity of the reflections from the reflex areas most likely is higher than the intensity of reflections from other nearby objects, the positioning system can be adapted to base the position/tilt calculation on the light-beam bearings at which reflections with the highest intensity were detected.

### Brief description of the drawings

The present invention will become more fully understood from the detailed description provided hereinafter and the accompanying drawings, which are not necessarily to scale, and are given by way of illustration only, In addition, the use of directions terms, such as horizontal, vertical etc. is for ease of explanation and should not be construed as structural or orientation limitations. In the different drawings, same reference numerals correspond to the same element.
Figs. 1A and 1B illustrate two wheel angles of interest in vehicle wheel alignment applications.
Fig. 2 illustrates schematically a top view of a vehicle wheel alignment arrangement for wheel toe-angle determination according to prior art.
Fig. 3 illustrates schematically a top view of an exemplary vehicle wheel alignment system according to the invention for simultaneous wheel toe and camber-angle determination.
Fig. 4 illustrates schematically an exemplary positioning system comprising a reflector and a light transceiver device according to the invention.
Fig. 5 illustrates schematically parts of the positioning system in Fig. 4.
Figs. 6A and 6B illustrate schematically a side view and a top view, respectively, of parts of the positioning system in Fig. 4
Fig. 7 illustrates schematically parts of the positioning system in Fig. 4 in a situation in which the reflector and light transceiver device are tilted in relation to each other.
Figs. 8A and 8B illustrate different designs of a reflector.
Fig. 9 illustrates schematically parts of an exemplary positioning system according to the invention.

### Detailed description

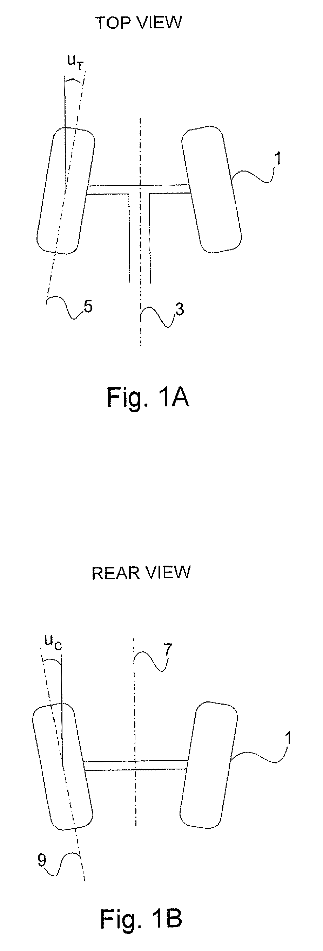

Figs. 1A and 1B illustrate two wheel angles of interest in vehicle wheel alignment applications.

Fig. 1A illustrates a top view of two front wheels 1 of a vehicle. The fronts of the front wheels are here seen to tilt in relation to the longitudinal center line 3 of the vehicle. The angle u_{T} so arising between the horizontal longitudinal center line 5 of a particular wheel 1 and the longitudinal center line of the vehicle is called the wheel toe angle u_{T}, or simply the toe of the wheel. When the fronts of the wheels are closer together than the rears of the wheels, they are said to toe in, while, when the fronts of the wheels are farther apart than the rears, they are said to toe out. Toe in is recorded as positive toe angle and toe out is negative.

Fig. 1B illustrates a rear view of the two front wheels 1 illustrated in Fig. 1A. As shown in the drawing, the wheels 1 also tilt in relation to true vertical, here illustrated by the vertical center line 7 of the vehicle. Thereby, an angle u_{C} arises between the vertical longitudinal center line 9 of a particular wheel 1 and true vertical 7. This angle u_{C} is called the wheel camber angle, or simply the camber of the wheel. Positive camber is defined as an outward tilt of the wheel in relation to true vertical while negative camber subsequently is an inward tilt of the wheel.

The toe u_{T} and the camber u_{C} of the front wheels of a vehicle is of great importance to vehicle road holding qualities, tire wear and fuel consumption. One purpose of toe angle u_{T} is to compensate for tolerances in steering linkage and the effect of positive/negative scrub radius when the vehicle is in motion. However, it will become a tire wearing angle if not set within factory specifications. The camber angle u_{C} particularly serves to provide directional control stability by placing maximum tire tread in contact with the road surface under all driving conditions.

Alignment of the wheels should be performed on a regular basis so as to set and maintain optimal values for the toe u_{T} and camber u_{C} angles. The optimal angles normally depend on the type of vehicle (size, weight, running characteristics, etc.) but typical values for the wheel toe and camber angle of a truck may be 2 mm/m and 20 mm/m, respectively. It should be understood that the toe and camber angles illustrated in the enclosed drawings of this document are exaggerated for illustrative purposes.

Fig. 2 illustrates schematically a top view of a wheel alignment arrangement 11 for wheel toe-angle determination according to prior art.

A laser arrangement comprising a horizontally rotatable point laser source 13 and a laser detector 15 is attached through a protruding member 17 to the wheel 19 whose toe-angle u_{T} is to be determined, such that the horizontal position of the laser arrangement depends on the toe angle of the wheel in a known way. Two fixed laser reflectors 21 which are horizontally aligned with the laser arrangement are arranged on opposite sides thereof. In this case they are seen to be attached to two rods which are levelled with the front and back, respectively, of the vehicle 23 whose wheels 19 are to be aligned. Each laser reflector 21 comprises three vertical reflex stripes 25 at known distances L₁, L₂ from each other, as illustrated by the front view of the front reflector 21 at top of the drawing. By sweeping a laser beam emitted from the rotatable point laser source 13 across the reflectors 21, the angles v₁₋₄ between the laser source 13 and the reflex stripes 25 of the reflectors 21 can be determined by determining the angular position of the laser source 13 at the point in time at which the reflected laser beam strikes the detector 15. As the positions of the reflectors 21 are known, the so obtained angles v₁₋₄ can be used to determine the horizontal position of the laser arrangement and, as the horizontal position of the laser arrangement depends on the wheel toe angle u_{T} in a known way, the toe angle can be determined.

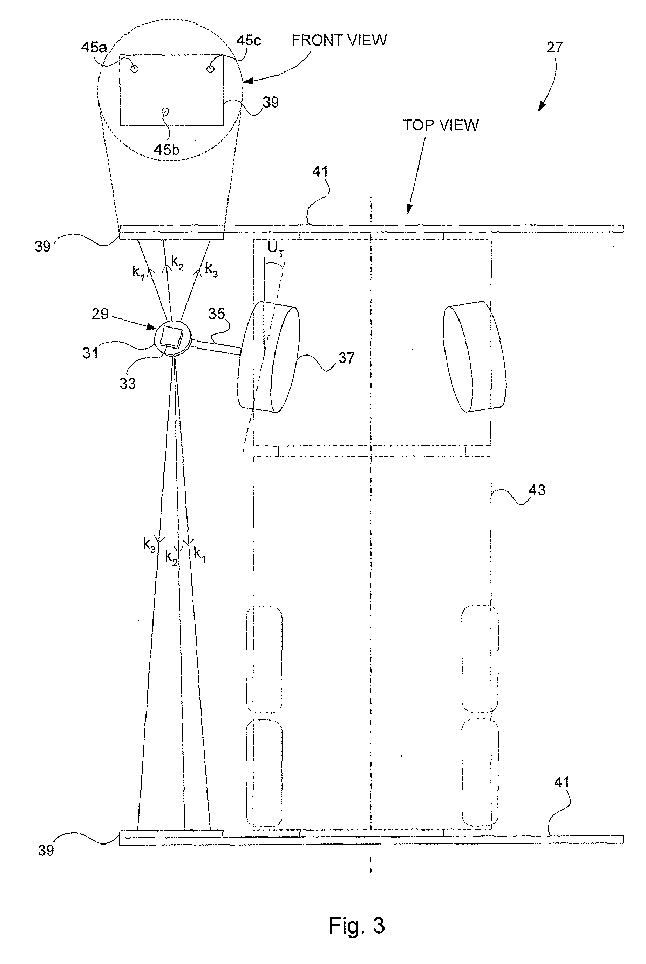

Fig. 3 illustrates schematically a top view of an exemplary wheel alignment system 27 according to the invention for simultaneous wheel toe and camber-angle determination.

A laser transceiver device 29 comprising a laser source 31 and laser detection means 33 is attached through a protruding member 35 to a wheel 37 that is to be aligned, such that the horizontal and vertical position of the laser transceiver device 29 depends on the toe and camber angle of the wheel 37 in a known way. The protruding member 35 is typically a universal wheel adapter having an elongate member 35 protruding from the center of the wheel 37. Two fixed laser reflectors 39 which are substantially horizontally aligned with the laser transceiver device 29 are arranged on opposite sides thereof. The reflectors 39 are attached to two rod-like members 41 which are easily mounted onto the front and back, respectively, of the vehicle 43 whose wheels 37 are to be aligned. The overall system set-up is hence similar to that of the prior art wheel alignment system for toe-angle determination described above with reference to Fig. 2.

However, the wheel alignment system 27 in Fig. 3 differs substantially from the arrangement in Fig. 2 as regards the design and functionality of the components responsible for the actual positioning procedure allowing for the inclination of the wheel 37 to be determined.

As illustrated in the front view of the front reflector 39 at top of the drawing, each laser reflector 39 comprises three or more non-aligned light-reflecting areas 45a-c, or reflex areas 45a-c, arranged in a known geometry, meaning that the relative positions of the reflex areas 45a-c are known and that not all of them are arranged along a straight line. Preferably, the reflex areas 45a-c are also arranged in an unsymmetrical geometry such that they form a scalene triangle. In this embodiment, the reflex areas 45a-c are point-shaped reflexes that are attached to a sheet or plate to form the reflector or reflector plate 39. Preferably but not necessarily, the reflex areas 45a-c are arranged in a common plane.

The laser source 31 of the laser transceiver device 29 is arranged to sweep at least two line-shaped laser beams having different inclination angles across each reflector 39. An inclination angle of a laser beam should in this context be construed as the tilt of the line-shaped beam in relation to true vertical. According to one embodiment, the laser source 31 comprises two line lasers emitting line-shaped laser beams having different inclination angles. The two line lasers can be rotatably arranged, e.g. on a spinning surface, so as to allow the laser beams to rotate 360 degrees and hence sweep across each reflector once every revolution. According to another embodiment, the laser source 31 comprises a single laser which is arranged to alter the inclination angle of the laser beam from one sweep across a reflector 39 to another. According to yet another embodiment, the laser source 31 comprises a single laser which is arranged to generate a laser beam having a cross-shaped cross section. The upper or lower half of the cross-shaped laser beam can then be shaded by a shutter such that the emitted beam has a cross section in form of a 'V' or a 'V' turned upside down. The laser transceiver device 29 may comprise any means known in the art for sweeping the laser beams across the reflectors 39. Instead of mounting the laser(s) onto a rotatable frame which serves to rotate the actual laser(s), the laser transceiver device 29 may for example comprise one or two fixed lasers and a rotatable reflection mirror or prism arrangement which serves to deflect the laser beams emitted from the fixed laser(s) so as to obtain the desired sweeping motion of the differently inclined beams across the reflectors 39.

The laser detection means 33 is responsible for detecting the reflections of the emitted laser beams when reflected by the reflex areas 45a-c of the reflector 39. Typically, the laser detection means 33 is co-located with the laser source 31, and the reflex areas 45a-c of the reflector 39 arranged to reflect light in the incident direction. The laser detection means 33 can comprise one or several detector elements which may be arranged to follow the sweeping motion of the laser beams, or be fixedly arranged and designed to cover a wide solid angle.

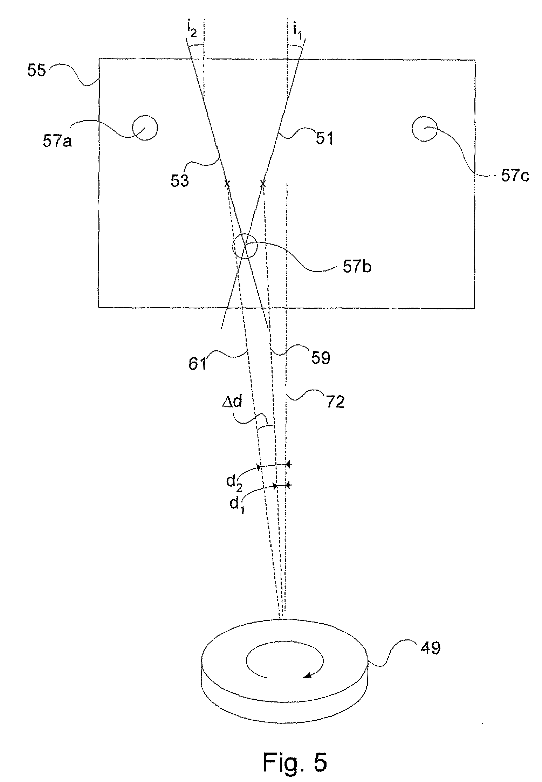

The laser transceiver device 29 further comprises bearing determination means (not shown) arranged to determine the bearings of the laser beams when reflected by the reflex areas 45. When one or several rotary laser(s) are used to effectuate the sweeping motion of the laser beams, this is typically achieved by determining the angle of rotation of the laser(s) in relation to a reference angle when a reflection is detected. The same principle can be used if separate beam deflecting means, such as a rotating reflection mirror arrangement, are used to sweep the beams from one or several fixed lasers across the reflectors 39, in which case the bearing of a beam when reflected by a reflex area 45a-c can be determined by taking a reading of the angular position of the beam deflection means at the point in time the reflection from the reflex area is detected. It should be emphasized that the bearings of the laser beams here referrers to the bearing of the central axis of the laser beams. As the line-shaped laser beams tilt in relation to true vertical, the bearing of the laser beam when reflection is detected does not necessarily correspond to the bearing from the laser source 31 to the reflex area 45a-c since the reflex area, at the point of reflection, can be located anywhere along the line-shaped laser beam. This will be described in more detail with reference to Fig. 5 below.

The laser transceiver device 29 further comprises calculation means (not shown) arranged to calculate the three dimensional (3D) position of each reflector 39 with respect to the laser source 31, based on the bearings of the laser beams when reflected by the reflex areas 45a-c.

Determination of the position of a reflector 39 with respect to the laser source 31 is rendered possible by the two differently inclined laser beams and the known geometry of the reflex areas 45a-c of the reflector 39. By sweeping the differently inclined laser beams across a reflector 39, two different bearings are obtained for each reflex area 45a-c (unless the position of the reflex area coincides with the central axes of the two laser beams in which case the same bearing is obtained for both beams). The difference (or correspondence) in bearings together with the inclination angles of the line-shaped laser beams can be used to calculate both an actual bearing and an elevation angle between the light source 39 and that particular reflex area 45a-c, thereby allowing a direction k₁₋₃ from the laser source 39 to each reflex area 45a-c to be determined. Typically, there is only one way in which the reflector 39 can be positioned in space in order for each reflex area 45a-c to be located along one of said directions and that position can be calculated by the calculation means as the relative positions of the reflex areas 45a-c are known.

In Fig. 3, the laser source 31 is attached to the wheel 37 that is to be aligned such that the dependencies between the horizontal and vertical position of the laser source and the toe and camber angles of the wheel are known, as are the positions of the reflectors 39. As the positioning principle described above allows for the 3D position of the light source 31 to be determined relative to the position of each reflector 39, the toe and camber angle of the wheel 37 can be simultaneously determined using the same measurement set-up.

Another advantage with the proposed positioning principle is that it can also be used for vehicle frame/chassis alignment which often is performed in connection with wheel alignment. By attaching the laser transceiver device 29 to the frame (not shown) of the vehicle 43, e.g. by attaching the elongate member 35 to the frame instead of the center of the wheel 37, undesired changes to the shape of the frame, such as side sways and vertical bends, can be detected. By allowing the same measurement set-up to be used in both vehicle wheel and frame alignment procedures, the work can be performed in a time and cost efficient manner.

It should be understood that the toe and camber angles of a wheel, as well as side sway or vertical bends of the vehicle frame, can be determined using only one of the two reflectors 39 illustrated in Fig. 3. However, the use of two reflectors 39 increases measurement accuracy. Also, there is a risk that "false reflections", i.e. laser-beam reflections from surrounding objects other than the reflex areas 45a-c, jeopardize the possibility of correctly positioning a reflector 39 with respect to the laser source 39. A reflection from an object close to the reflector 39 could end up in an erroneous determination of the reflector position if the object causing the false reflection is located along a direction from the laser source 31 which, together with two of the directions k₁₋₃ to the reflex areas 45a-c, result in another possible position of the reflector 39. If two reflectors 39 are used, there relative positions in space (the distance between them, their tilt or absence of tilt in relation to each other, etc.) can be used to exclude such erroneously determined reflector positions.

The principles of position determination according to the invention will now be described in more detail.

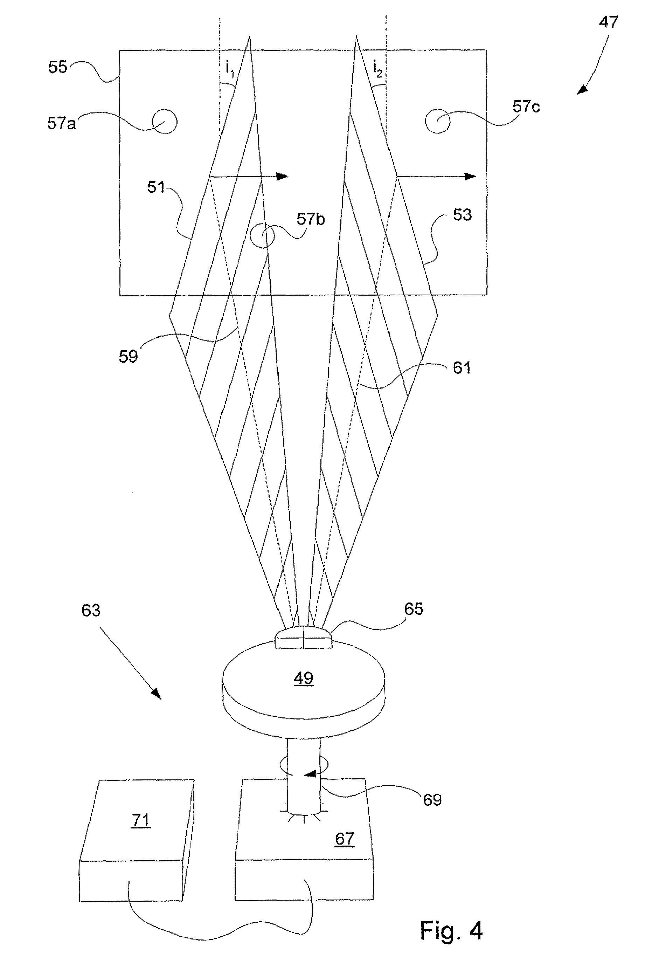

Fig. 4 illustrates schematically a positioning system 47 according to an embodiment of the invention. A light source 49 is arranged to sweep a first 51 and at least a second 53 line-shaped light beams having different inclination angles i₁, i₂ across a reflector 55 comprising at least three non-aligned light-reflecting areas, or reflex areas 57a-c, arranged in a constellation having a known geometry. The light beams 51, 53 are seen to diverge during propagation towards the reflector 55 and the central axes 59, 61 of the light beams 51, 53 are illustrated in dashed lines.

Analogous to the laser source 31 in the wheel alignment system 27 in Fig. 3, the light source 49 of the positioning system 47 is part of a light transceiver device 63. Besides the light source 49, the light transceiver device 63 comprises a light detector 65 comprising two separate detector elements for detecting reflections of the respective light beam 51, 53. The light transceiver device 63 further comprises bearing determination means 67 arranged to determine the bearing of a light beam 51, 53 at the point in time a reflection of that light beam is detected by the detector 65. In this embodiment, the bearing determination means 67 is coupled to the detector 65 and arranged to determine the bearing of a light beam based on the rotational angle of a rotary member 69 at the point in time a reflection of that beam is detected. The rotary member 69 here serves to rotate the light source 49 and the light detector 65 and the bearing of a light beam is hence directly dependent on the rotational angle of the rotary member 69. The bearing determination means 67 of the light transceiver device 63 is connected to calculation means 71 for calculating the 3D position of the reflector 55 relative to the light source 49, based on the bearings of the light beams 51, 53 when reflections thereof are detected by the detector 65, and the known constellation geometry of the reflex areas 57a-c. The calculation means 71 may or may not form a part of the light transceiver device 63. In case the calculation means is included in an external unit which is not a part of the light transceiver device 63, the bearing determination means 67 can be arranged to be detachably connectable to the external calculation means. Such external calculation means may be, e.g., a conventional computer comprising computer program code means which, when executed, causes a computer processor to take the bearings determined by the bearing determination means 67 as input parameters and calculate the relative 3D position of the reflector 55.

In the exemplary embodiment of the positioning system 47 illustrated in Fig. 3, the light source 49 rotates clockwise such that the light beams 51, 53 are swept from left to right across the reflector 55, as illustrated by arrows in the drawing. For illustrative purposes, the first 51 and second 53 light beams are depicted as closely separated beams having equal but opposite inclination angles i₁, i₂. However, it should be appreciated that the beams 51, 53 could have other inclination angles and could be swept across the reflector 55 in any conceivable way as long as the inclination angles i₁, i₂ differ from each other and as long as each beam strikes all the reflex areas 57a-c. A more convenient way to design the light transceiver device 63 would be to have the light beams 51, 53 emitted in more opposite directions. In that way, the detector elements of the light detector 65 could be more widely separated, reducing the risk that a detected reflection of one of the light beams is taken for a reflection of the other light beam. So for example may a light transceiver arrangement according to another embodiment of the invention comprise a light source including two light emitting devices, such as lasers, emitting light beams in strictly opposite directions, and two light detector elements of which one constantly faces the direction in which one of the light beam is emitted while the other one constantly faces the direction in which the other light beam is emitted.

Fig. 5 illustrates schematically parts of the positioning system 47 in Fig. 4 at the two points in time at which the first 51 and the second 53 light beams strike the reflex area 57b, merged into one picture. For illustrative purposes, only the light source 49 of the light transceiver device 63 shown in Fig. 4 is depicted in Fig. 5 and several subsequent drawings which will be described hereinafter. Therefore, in the ensuing description, reference will repeatedly be made to Fig. 4 which shows all parts of the light transceiver device 63 according to the invention.

When the first 51 and second 53 light beams strike the reflex area 57b, they are reflected back towards the light detector 65. When the detector 65 detects a reflection from one of the light beams, the bearing of that light beam is determined by the bearing determination means 67, typically in form of an angle of deviation d₁, d₂ from a reference axis 72 in the plane in which the light beam 51, 53 is swept. As aforementioned, the determined bearing d₁, d₂ of a light beam is the bearing of the central axis 59, 61 of that light beam and not necessarily the actual bearing from the light source 49 to the reflex area 57b. The so determined bearings d₁, d₂ of the first 51 and second 53 light beams are communicated to the bearing calculation means 71 which uses said bearings d₁, d₂, the difference Δd of said bearings d₁, d₂, and the known inclination angle i₁, i₂ of each light beam 51, 53 in a first calculation step to calculate both the actual bearing from the light source 49 to the reflex area 57b and the elevation angle between the plane in witch the light beams are swept and the reflex area 57b.

The result of this first calculation step is hence the bearing and elevation angle from the light source 49 to a reflex area 57b, which together yield the direction between the light source 49 and that particular reflex area 57b. By performing the calculation for each reflex area 57a-c, the bearing and elevation, and hence the direction, from the light source 49 to each reflex area 57a-c can be determined.

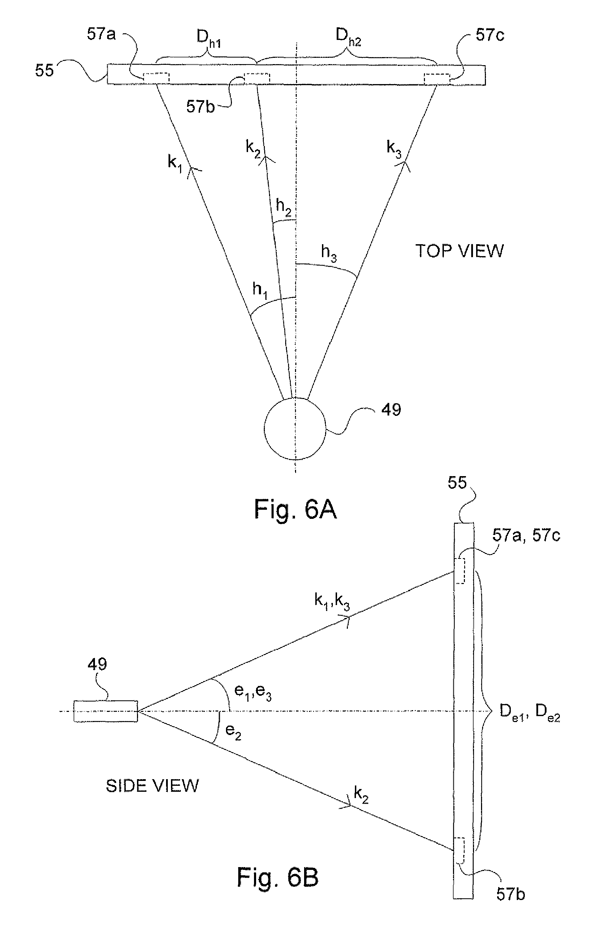

The result of the above described calculation step is illustrated in Figs. 6A and 6B which illustrate a top view and a side view, respectively, of the parts of the positioning system 47 illustrated in Fig. 5. The directions from the light source 49 to the reflex areas 57a, 57b and 57c are provided with reference numerals k₁, k₂ and k₃, respectively. Fig. 6A illustrates the calculated bearings h₁-h₃ to the respective reflex area 57a-c, whereas Fig. 6B illustrates the calculated elevation angles e₁-e₃ to the respective reflex area 57a-c.

The calculation means 71 of the light transceiver device 63 is further arranged to, in a second calculation step, calculate the 3D position of the reflector 55 based on the calculated bearings h₁-h₃ and elevations e₁-e₃ from the light source 49 to the reflex areas 57a-c, and the known geometry of the reflex area constellation 57a-c.

This is possible as the bearings h₁-h₃ and the elevation angles e₁-e₃ calculated in the first calculation step indicate the horizontal and vertical angles between the directions k₁-k₃ from the light source 49 to the different reflex areas 57a-c. The values of these horizontal and vertical angles and the relationships between these values compared to the relationships between the known horizontal Dₕ₁, Dₕ₂ and vertical Dₑ₁, Dₑ₂ distances between the reflex areas 57a-c can be used by the calculation means 71 in the second calculation step to calculate the 3D position of the reflector 55.

It should be appreciated that there are many different ways in which the position of the reflector 55 can be calculated once the directions k₁-k₃ to all of its reflex areas 57a-c are determined, and that the present invention is not limited to any particular way of doing so. The general principle is that by determining the directions k₁-k₃ from the light source 39 to the reflex areas 57a-c, three hypothetical lines k₁-k₃ representing said directions can be drawn from the light source 49. As one of the reflex areas 57a-c of the reflector 55 are known to be located along each such hypothetical line k₁-k₃, and as the relative positions of the reflex areas are known, the position of the reflector 55 with respect to the light source 49 can be determined by analyzing the pattern of the hypothetical lines.

Besides the possibility to determine the 3D position of a reflector 55 comprising at least three non-aligned reflex areas 57a-c, the proposed positioning principle also allows for determination of the tilt angles between the light source 49 and the reflector.

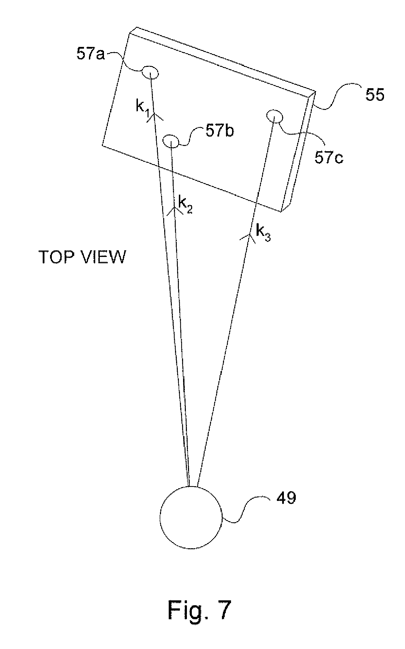

Fig. 7 illustrates a top view of the parts of the positioning system 47 illustrated in Figs. 5 and 6. Here, the reflector 55 is seen to tilt in relation to the light source 39. Of course, a tilt of the reflector 55 with respect to the light source 49 will affect the horizontal and vertical angles between the hypothetical lines k1-k3 representing the directions from the light source 39 to each reflex area 57a-c of the reflector. As a person skilled in the art realizes, the values of bearings and the elevation angles determined in the first calculation step described above, and the relationships between these values as compared to the relationships between the known distances between the reflex areas 57a-c of the reflector 55 are sufficient to determine both the position and tilt of the reflector 55 with respect to the light source 49.

It should be understood that the so determined tilt actuary is the tilt of the reflector 55 with respect to the plane in which the light beams are swept. However, the plane in which the light beams are swept depends in a known way on the tilt of the light source and hence the tilt between the light source 49 and the reflector 55 can be calculated.

If the reflector 55 tilts in relation to the light source 49, the computational power load on the calculation means 71 increases as the geometrical calculations needed to determine the position in space of a tilting reflector are demanding. In some applications the tilt between the light source 49 and the reflector 55 may be the quantity of interest while, in other applications, the tilt is of no interest at all. In the wheel alignment system 27 illustrated in Fig. 3, the camber angle of the wheel 37 to which the laser source 31 is attached will not only displace the laser source vertically, it will also tilt the laser source in relation to the reflector plates 39. As the horizontal and vertical displacements of the laser source 31 are sufficient to determine the toe and camber angle of the wheel 37, the tilt between the laser source and the reflector has no relevance. To reduce the computational power load on the calculation means, the laser source 31 may, for example by means of a gyro arrangement, be arranged such that no tilt between the laser source and the reflector occurs regardless of the tilt of the wheel 37 and hence the tilt of the protruding member 35 to which the laser source is attached. The same principle may be used in any application in which the positioning system 47 is used and a tilt between the light source 49 and the reflector 55 is undesired. Of course, one or both of the light source 49 and the reflector 55 can be arranged in a non-tiltable way, for example by means of gyro arrangements.

As aforementioned, there is a risk that false reflections, i.e. light beam reflections from surrounding objects other than the reflex areas 57a-c, jeopardize the ability to correctly calculate the position of the reflector 55 with respect to the light source 49. In the wheel alignment system 27, illustrated in Fig. 3, we have seen that the risk of erroneous positioning of the reflector 39 can be reduced by using two reflectors 55 which are arranged in known positions relative to each other.

Another way to reduce the risk of erroneous positioning of the reflector due to light reflections from objects other than the reflex areas is to take the likelihood of a certain reflector position into account. The calculation means 71 of the light transceiver device 63 can be adapted to discard calculated positions of the reflector that are highly unlikely. For example, once again with reference to the exemplary wheel alignment system 27 in Fig. 3, as the toe and camber angles of a wheel typically lie within certain intervals, a calculated reflector position implying that the toe and/or camber angle deviates substantially from that interval can be discarded as unlikely.

Yet another way to reduce the risk of erroneous positioning of the reflector due to "false" light reflections is to measure the intensity of the detected light. As the intensity of the reflections from the reflex areas 57a-c most likely is higher than the intensity of reflections from other nearby objects, the light transceiver device 63 can be adapted to base the calculation of the position and/or tilt of the reflector 55 on the light-beam bearings at which reflections with the highest intensity were detected. To implement this functionality, the light transceiver device 63 can comprise a light detector 65 which is arranged to measure the intensity of incident light, and discriminating means connected between the detector 65 and the bearing determination means 67, or between the bearing determination means 67 and the calculation means 71, arranged to discard detections of reflections having an intensity below a certain threshold value. This solution is advantageous in that reflector position/tilt calculations never are performed based on false reflections, thus reducing computational load on the calculations means 71.

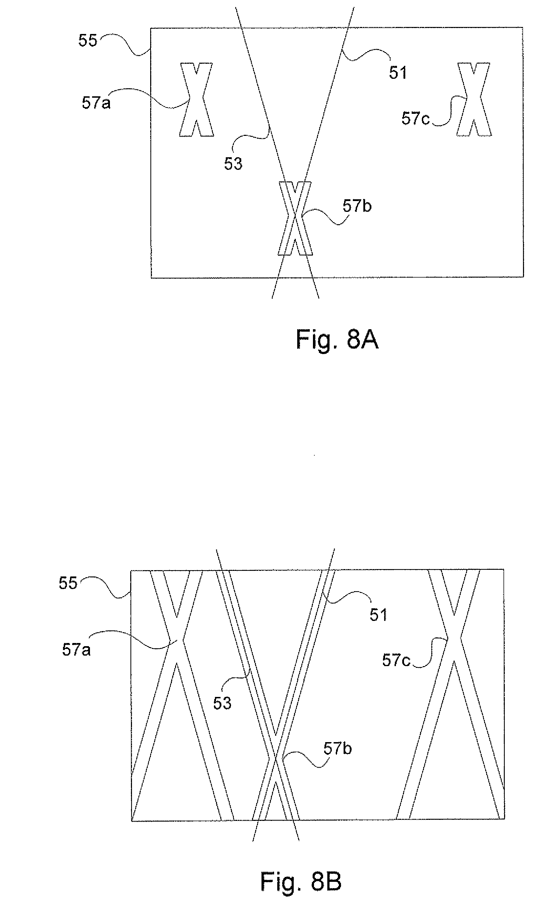

When the positioning system 47 according to the invention is used in applications in which the light source 49 is known not to tilt in relation to the reflector 55, the reflex areas 57a-c of the reflector can be designed to increase the intensity of the reflections, thereby facilitating detection of desired reflections and, additionally, facilitating discrimination of undesired low-intensity reflections from surrounding objects. Figs. 8A and 8B illustrate two embodiments of the reflector 55 in which the reflex areas 57a-c are elongated in the longitudinal direction of the line-shaped light beams 51, 53. When the light beams 51, 53 strike the respective reflex area 57a-c, a greater intensity of the light beams 51, 53 are reflected as compared with the intensity reflected by nearby objects with similar reflectivity characteristics but smaller active reflection areas.

In order to increase the accuracy in the position and/or tilt determination of the reflector 55, the positioning system 49 can use more than two line-shaped light beams 51, 53. According to one embodiment of the light transceiver device 63, the light source 49 is arranged to sweep not two but three line-shaped light beams having different inclination angles across the reflector 55. For example, a rotating light source, similar to the rotating light source 49 in Fig. 5, can comprise three light-emitting devices, each which is separated 120 degrees from the other, emitting light beams with different inclination angles. As each individually inclined light beam results in one bearing to each reflex area 57a-c, three different bearings are obtained for each reflex area. By using three measurements of the bearing to a particular reflex area 57a-c instead of two, a higher accuracy is achieved in the determination of the actual bearing and elevation angle from the light source 49 to that reflex area 57a-c.

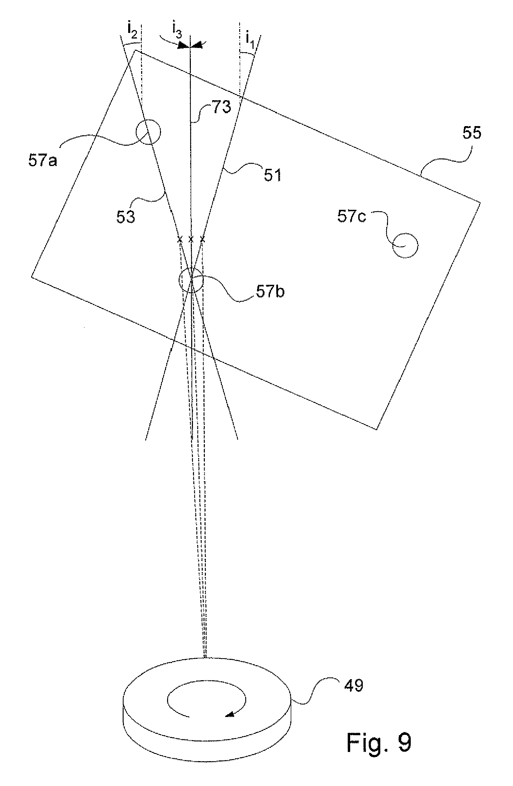

Another advantage of using more than two differently inclined light beams is that the resolution of the positioning system 47 increases. Fig. 9 illustrates schematically parts of a positioning system according to the invention in which the light source 49 is arranged to sweep three line-shaped light beams 51, 53, 73 having different inclination angles i₁, i₂, i₃ across the reflector 55. As seen in the drawing, the reflector is tilted in relation to the light source such that one of the light beams 53 strikes two different reflex areas 57a, 57b at the same time. If only one light beam besides the one beam 53 striking two reflex areas simultaneously was used, it would be demanding, if even possible, to unambiguously calculate the position and/or tilt of the reflector 55, considerably increasing the computational load on the calculation means 71. However, when using three differently inclined light beams 51, 53, 73, the system resolution increases and the required computational power of the calculation means 71 is reduced.

Throughout this document, the term "reflector" has been used for the object 39, 55 comprising the three reflex areas 45a-c, 57a-c. It should, however, be appreciated that any kind of object can be provided with three or more non-aligned reflex areas 45a-c, 57a-c so as to be able to determine the object's position in space with respect to a point of reference at which a light transceiver arrangement 63 according to the invention is placed.

It should also be appreciated that although directional terms, such as "horizontal" and "vertical", have been used herein when describing the positioning principle according to the invention, these terms have been used merely to facilitate explanation and should not be construed in a limiting sense.

Accordingly, it is intended that the invention should be limited only by the scope of the claims appended hereinafter.

## Claims

1. A method for determining the position of an object, **characterized in** comprising the steps of:
- sweeping, by means of a light source (31; 49), at least two line-shaped light beams (51, 53; 73) having different inclination angles (i₁, i₂; i₃) across an object (39; 55) comprising at least three non-aligned light-reflecting areas (45a-c; 57a-c) at known positions relative to each other;
- determining the bearings (d₁, d₂) of said light beams when reflected by said light-reflecting areas; and
- calculating the three dimensional position and/or tilt of said object relative to said light source based on said determined bearings and the known relative positions of the light-reflecting areas.

2. A method according to claim 1, wherein the step of beam-sweeping step involves sweeping three or more line-shaped light beams (51, 53; 73) having different inclination angles (i₁, i₂; i₃) across said object (39; 55).

3. A method according to claim 1 or 2, wherein the light source (31; 49) is a rotary light source (31; 49) and wherein the step of determining the bearings (d₁, d₂) of the light beams (51, 53; 73) when reflected by the light-reflecting areas (45a-c; 57a-c) comprises the step of detecting, by means of a light detecting means (65), a reflection of a particular light beam, and determine the bearing of that particular light beam based on the rotational angle of the rotary light source at the point in time at which said reflection is detected.

4. A method for vehicle wheel alignment, said method comprises the steps of:
- attaching a light source (31) to a wheel (37) that is to be aligned such that the position of the light source in space depends in a known way on the toe (u_{T}) and camber (u_{C}) angle of said wheel;
- placing at least one reflector (39) in a known position in space, which reflector (39) comprises at least three non-aligned light-reflecting areas (45a-c) at known positions relative to each other;
- sweeping, by means of said light source (31), at least two line-shaped light beams (51, 53; 73) having different inclination angles (i₁, i₂; i₃) across said reflector (39);
- determining the bearings (d₁, d₂) of said light beams (51, 53; 73) when reflected by said light-reflecting areas (45a-c);
- calculating the three dimensional position and/or tilt of said light source (31) relative to said at least one reflector (39) based on said determined bearings (d₁, d₂) and the known relative positions of the light-reflecting areas; and
- calculating the toe (u_{T}) and/or camber (u_{C}) angle of the wheel (37) based on the calculated position of the light source (31) relative to the at least one reflector (39), the known position of said at least one reflector (39), and the known dependencies between the position of the light source (31) and said toe (u_{T}) and camber (u_{C}) angle of the wheel (37).

5. A light transceiver device (29; 63) for determining the position of an object (39; 55) comprising at least three non-aligned light-reflecting areas (45a-c; 57a-c) at known positions relative to each other, **characterized in** comprising:
- a light source (31; 49) arranged to sweep at least two line-shaped light beams (51, 53; 73) having different inclination angles (i₁, i₂; i₃) across said object;
- light detection means (65) arranged to detect reflections of said light beams when reflected by said light-reflecting areas (45a-c; 57a-c);
- bearing determination means (67) arranged to determine the bearings of said light beams (51, 53; 73) when reflected by said light-reflecting areas (45a-c; 57a-c); and
- calculation means (71) arranged to calculate the three dimensional position and/or tilt of said object relative to said light source based on said determined bearings and the known relative positions of the light-reflecting areas.

6. A light transceiver device (29; 63) according to claim 5, wherein said light source (31; 49) comprises at least one laser device emitting line-shaped laser beams (51, 53; 73) having different inclination angles across said object (39; 55).

7. A light transceiver device (29; 63) according to claim 5 or 6, wherein said light source (31; 49) comprises two lasers devices which are arranged to rotate around a common axis, each laser device further being arranged to emit a line-shaped laser beam (51, 53; 73) having an inclination angle different from that of the laser beam emitted by the other laser device.

8. A light transceiver device (29; 63) according to any of the claims 5 to 7, wherein the light detection means (65) is further arranged to measure the intensity of the detected light-beam reflections, said light transceiver device (29; 63) further comprising discriminating means arranged to discard detections having an intensity below a predetermined threshold value, so as to reduce the risk that calculation of the position and/or tilt of the object (39; 55) is performed on reflections from objects other than said light-reflecting areas (45a-c, 57a-c).

9. A positioning system (47), **characterized in that** it comprises:
- an object (39; 55) comprising at least three non-aligned light-reflecting areas (45a-c; 57a-c) at known positions relative to each other, and
- a light transceiver device (29; 63) comprising:
- a light source (31; 49) arranged to sweep at least two line-shaped light beams (51, 53; 73) having different inclination angles (i₁, i₂; i₃) across said object;
- light detection means (65) arranged to detect reflections of said light beams when reflected by said light-reflecting areas (45a-c; 57a-c);
- bearing determination means (67) arranged to determine the bearings of said light beams when reflected by said light-reflecting areas; and
- calculation means (71) arranged to calculate the three dimensional position and/or tilt of said object (39; 55) relative to said light source (31; 49) based on said determined bearings and the known relative positions of the light-reflecting areas.

10. A positioning system (47) according to claim 9, wherein said light source (31; 49) comprises at least one laser device emitting line-shaped laser beams (51, 53; 73) having different inclination angles across said object (39; 55).

11. A positioning system (47) according to claim 9 or 10, wherein said light source (31; 49) comprises two lasers devices which are arranged to rotate around a common axis, each laser device further being arranged to emit a line-shaped laser beam (51, 53; 73) having an inclination angle different from that of the laser beam emitted by the other laser device.

12. A positioning system (47) according to any of the claims 9 to 11, wherein the light detection means (65) is further arranged to measure the intensity of the detected light-beam reflections, said light transceiver device (29; 63) further comprising discriminating means arranged to discard detections having an intensity below a predetermined threshold value, so as to reduce the risk that calculation of the position and/or tilt of the object (39; 55) is performed on reflections from objects other than said light-reflecting areas (45a-c; 57a-c).

13. A wheel alignment system (27), **characterized in that** it comprises:
- at least one reflector (39; 55) comprising at least three non-aligned light-reflecting areas (45a-c; 57a-c) at known positions relative to each other, said at least one reflector (39; 55) being arranged in a known position in space;
- a light source (31; 49) arranged to sweep at least two line-shaped light beams (51, 53; 73) having different inclination angles (i₁, i₂; i₃) across said reflector (39; 55);
- attachment means (35) arranged to attach said light source (31; 49) to a wheel (37) that is to be aligned such that the position of the light source in space depends on the toe (u_{T}) and camber (u_{C}) angle of said wheel;
- light detection means (65) arranged to detect reflections of said light beams when reflected by said light-reflecting areas (45a-c; 57a-c);
- bearing determination means (67) arranged to determine the bearings of said light beams when reflected by said light-reflecting areas; and
- calculation means (71) arranged to calculate the three dimensional position and/or tilt of said reflector (39; 55) relative to said light source (31; 49) based on said determined bearings and the known relative positions of the light-reflecting areas, and calculate the toe (u_{T}) and/or camber (u_{C}) angle of the wheel (37) based on the calculated position of the light source (31; 49) relative to the at least one reflector (39; 55), the known position of said at least one reflector (39; 55), and the known dependencies between the position of the light source (31; 49) and said toe (u_{T}) and camber (u_{C}) angle of the wheel (37).

14. A computer program product for use with a positioning system according to any of claims 9 to 12, said computer program product comprising a computer readable medium having computer program code means stored thereon, **characterized in that** said computer program code means, when executed by a processor, causes said processor to calculate the three dimensional position and/or tilt of said object (39; 55) relative to said light source (31; 49) using the bearings determined by said bearing determination means (67) and the known relative positions of said light-reflecting areas (45a-c; 57a-c) as input parameters.

15. A computer program product according to claim 14 for use in a wheel alignment system according to claim 13, wherein the computer program code means, when executed by the processor, causes the processor to further calculate the toe (u_{T}) and/or camber (u_{C}) angle of the wheel (37) using the known position of said at least one reflector (39; 55), the calculated position of the light source (31; 49) relative to said at least one reflector (39; 55) and the known dependencies between the position of the light source (31; 49) and said toe (u_{T}) and camber (u_{C}) angle of the wheel (37) as input parameters.
